# FASCICULE DE BREVET EUROPEEN

(11) **EP 0 743 111 B1**
(45) Date de publication et mention de la délivrance du brevet: **12.09.2001**
(21) Numéro de dépôt: 96401086.2
(22) Date de dépôt: 17.05.1996
(51) Int. Cl.: B21C 37/29, A01K 1/06

(54) **Procédé de fabrication d'un balancier de cornadis, le balancier de cornadis réalisé par le procédé et un cornadis incorporant un tel balancier**
Verfahren zur Herstellung eines Fütterungsgitterhebels, ein dadurch hergestellter Hebel und ein Futterungsgitter mit einem solchen Hebel
Method for the manufacture of a lever for a feeding fence, a lever produced by the method and a feeding fence incorporating the lever

(30) Priorité: 19.05.1995 FR 9505996
(43) Date de publication de la demande: 20.11.1996
(73) Titulaire: AGRITUBEL S.A., 86200 Loudun (FR)
(72) Inventeur: Fornes, José Maria, 86200 Loudun (FR)
(74) Mandataire: Derambure, Christian

(56) Documents cités:
- EP-A- 0 293 101
- FR-A- 2 687 897
- US-A- 5 137 293

## Description

L'invention concerne un procédé de fabrication d'un balancier de cornadis, le balancier de cornadis réalisé par le procédé et un cornadis incorporant un tel balancier; voir FR-A 2 687 897.

Les cornadis connus comportent classiquement des éléments tubulaires de structure dont un ou généralement plusieurs montants auxquels est solidarisé chacun une chape recevant un balancier monté pivotant grâce à un tourillon.

Un tel balancier comporte donc habituellement un double trou débouchant diamétral situé dans sa partie médiane.

Selon une première réalisation connue, les deux trous sont réalisés par perçage et enlèvement de matière. Cette réalisation présente cependant l'inconvénient d'une usure rapide du tourillon sur lequel est monté le balancier.

Pour remédier à cet inconvénient on a proposé selon une seconde réalisation de monter dans le double trou débouchant diamétral une bague ou manchon formant palier pour le tourillon. Toutefois, cette réalisation a comme inconvénient d'être coûteuse.

L'invention vise donc à remédier à ces inconvénients et à cet effet elle propose, selon un premier aspect, un procédé de fabrication d'un balancier de cornadis dans lequel on part d'un tube creux, conformé, en acier et, successivement, on réalise d'abord dans le tube un double trou débouchant diamétral par fluoperçage puis on réalise une galvanisation totale du tube ainsi percé, y compris dans et à la périphérie des trous de manière à réaliser pour chaque trou, par fluoperçage, d'une part un palier interne dans le tube et, d'autre part, une collerette externe, entourant le trou à sa périphérie et à l'extérieur du tube.

Selon une première variante de réalisation, on réalise le double trou débouchant diamétral en deux étapes successives, une pour chaque trou.

Selon une seconde variante de réalisation, on réalise le double trou débouchant diamétral en une étape unique, les deux trous simultanément.

Selon d'autres caractéristiques du procédé, on réalise, pour chaque trou, par fluoperçage, d'une part un palier interne dans le tube et, d'autre part, une collerette externe entourant le trou à sa périphérie et à l'extérieur du tube. Les deux paliers internes sont écartés axialement l'un de l'autre.

On réalise le fluoperçage à une température de l'ordre de 1 050°C. Pendant le fluoperçage, on procède à un refroidissement notamment à l'air et/ou à l'eau.

On réalise la galvanisation à chaud, par immersion, à une température de l'ordre de 450°C.

Selon un deuxième aspect, l'invention concerne un balancier de cornadis réalisé par le procédé qui vient d'être mentionné.

Ce balancier se présente sous la forme d'un tube creux, conformé, en acier, galvanisé en totalité, ayant un double trou débouchant diamétral, chaque trou ayant d'une part un palier interne dans le tube et d'autre part une collerette externe entourant le trou à sa périphérie et à l'extérieur du tube, ladite collerette faisant fonction de rondelle d'écartement pour une chape de maintien pourvue d'un tourillon.

Selon d'autres caractéristiques du balancier de cornadis, le double trou débouchant diamétral est situé dans la partie médiane de la longueur du balancier. Le balancier comporte à l'une de ses extrémités une monture de guidage et de fin de course en forme de fourche recevant un tourillon transversal. Ce tourillon réalisé en matière plastique ou/et est amortisseur pour limiter le bruit. Il résulte de ce qui précède que le balancier de cornadis ne comporte pas de bague rapportée telle que celle de l'état connu de la technique.

Selon un troisième aspect, l'invention concerne un cornadis comportant des éléments tubulaires de structure dont un où généralement plusieurs montants auxquels est solidarisés chacun une chape recevant un balancier tel que mentionné précédemment monté pivotant grâce à un tourillon.

L'invention sera bien comprise dans sa description qui suivra en référence aux dessins annexés dans lesquels :
- les figures 1A à 1I sont neuf vues schématiques en coupe par un plan transversal par rapport au balancier de cornadis illustrant les étapes successives du procédé de fabrication selon l'invention.

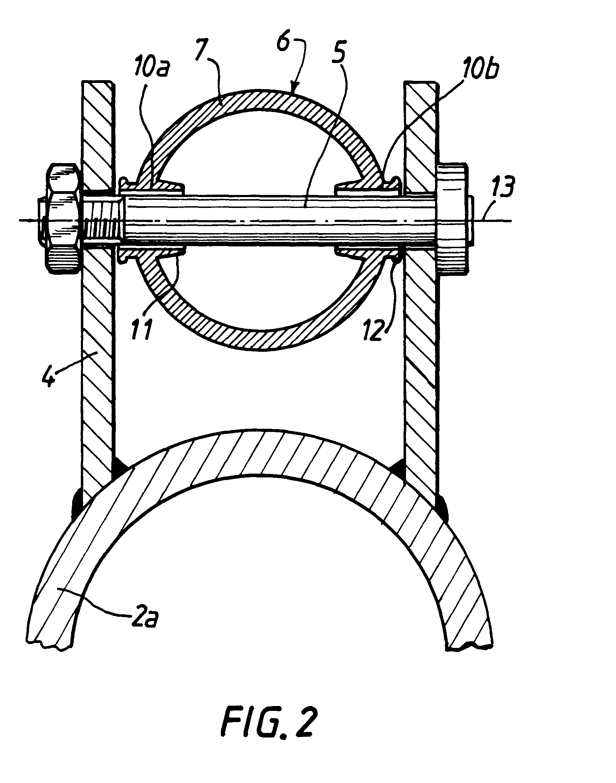

- La figure 2 est une vue schématique d'un cornadis incorporant le balancier selon l'invention, selon une section droite transversale par rapport au balancier de cornadis.

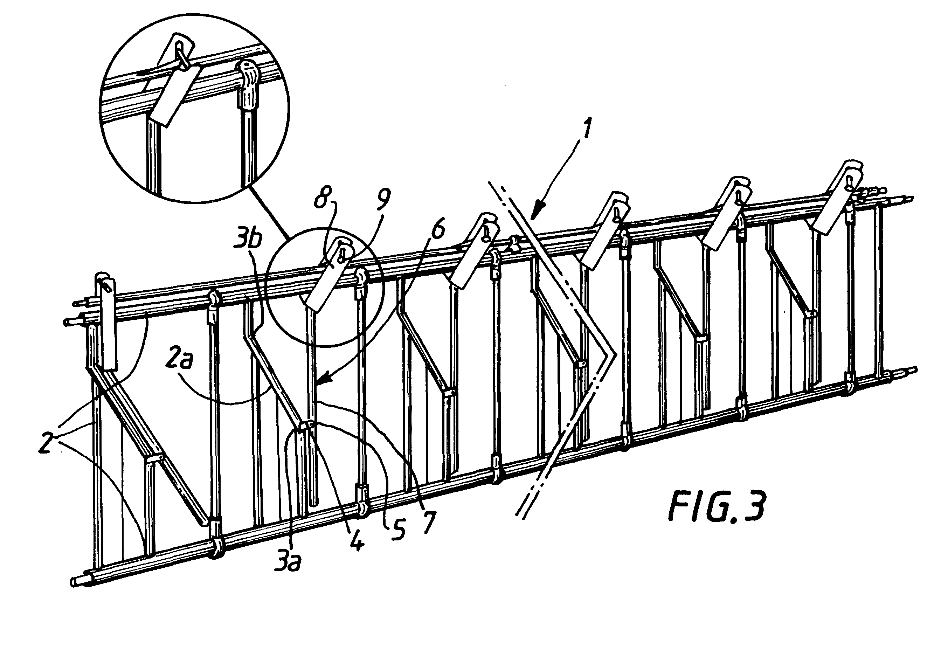

- La figure 3 est une vue schématique en élévation d'un cornadis incorporant le balancier de cornadis selon l'invention.

Un cornadis 1 comporte une pluralité d'éléments tubulaires de structure 2 associés rigidement les uns aux autres. Cet ensemble est généralement plan et peut être fixé à une super structure appropriée.

Les éléments 2 comprennent un et généralement plusieurs montants 2a présentant notamment un double coude inférieur 3a et supérieur 3b, le coude 3a étant dans ou proche de la partie médiane de la longueur du montant 2a.

Sur le montant 2a et notamment à l'endroit du coude 3a est rigidement fixée donc solidarisé une chape 4 disposée dans le plan du cornadis 1.

Cette chape 4 est destinée à recevoir un tourillon 5 sur lequel est monté un balancier 6.

Le balancier 6 peut donc pivoter autour du tourillon 5 entre deux positions extrêmes.

Le balancier 6 se présente sous une forme générale monobloc et comprend un tube creux en acier conformé pour avoir une forme générale rectiligne tout en étant pourvu à l'une de ses extrémités - en l'occurrence l'extrémité supérieure - d'une monture 8 de guidage et de fin de course.

Cette monture 8 est légèrement inclinée par rapport au tube 7 tout en étant située dans le plan du cornadis 1. Cette monture 8 reçoit un tourillon transversal 9. Ce tourillon 9 est réalisé en matière plastique ou est amortisseur de manière à limiter le bruit lorsque le balancier 6 arrive en fin de course.

Pour permettre le montage du balancier de cornadis 6 à pivotement par rapport au tourillon 5, il est prévu que le tourillon 5 soit monté directement, sans l'interposition de bagues rapportées, dans un double trou débouchant diamétral 10a, 10b. Ce double trou débouchant diamétral 10a, 10b est situé dans la partie médiane de la longueur du balancier 6.

Le tube 7 du balancier de cornadis 6, en acier, est galvanisé en totalité, y compris dans et à la périphérie des trous 10a, 10b.

Chaque trou 10a, 10b a un palier interne 11 et une collerette externe 12. Le palier 11 est placé à l'intérieur du tube 7 et s'étend sur une certaine longueur en direction axiale le long de l'axe commun 13 des deux trous 10a, 10b.

La collerette 12 entoure chaque trou 10a, 10b à sa périphérie et à l'extérieur du tube 7.

Tant le palier 11 que la collerette 12 sont monoblocs avec le tube 7, sans discontinuité.

Le palier 11 présentant une certaine longueur axiale peut coopérer avec le tourillon 9. La collerette 12 fait fonction de rondelle d'écartement avec les deux parties de la chape 4. Cette structure permet tout à la fois de maintenir convenablement le balancier de cornadis 6 tout en évitant que le tube 7 ne frotte contre la chape 4. De plus, le jeu existant entre les trous 10a, 10b et le tourillon 9 est minimal pour éviter tout débattement intempestif du balancier par rapport au plan du cornadis.

Un tel balancier de cornadis 6 est fabriqué par un procédé dans lequel on part d'abord d'un tube 7 creux, conformé, en acier mais non encore galvanisé et non percé des trous 10a, 10b.

Puis, successivement, on réalise d'abord dans le tube 7 le double trou débouchant diamétral 10a, 10b par la technique du fluoperçage. Puis, on réalise une galvanisation totale du tube 7 ainsi percé, y compris dans et à la périphérie des trous 10a, 10b.

Selon une première variante de réalisation correspondant au cas des figures lA à 1I, on réalise le double trou débouchant diamétral 10a, 10b en deux étapes successives, une pour chaque trou.

A cet effet, on utilise une machine de fluoperçage comprenant deux outils de perçage 14a, 14b placés en regard l'un de l'autre sur un axe commun 15 tout en ayant leurs pointes 16a, 16b séparées par un espace central 17.

Les outils de fluoperçage 14a, 14b sont montés de manière à pouvoir coulisser le long de l'axe 15 notamment vers le plan P médian. A cet effet, la machine comporte des moyens d'entraînement appropriés.

La machine comporte également des moyens de refroidissement notamment à l'air et/ou à l'eau.

La machine comporte également des moyens de positionnement et de fixation d'un tube 7 dans l'espace 17 de façon symétrique par rapport au plan P.

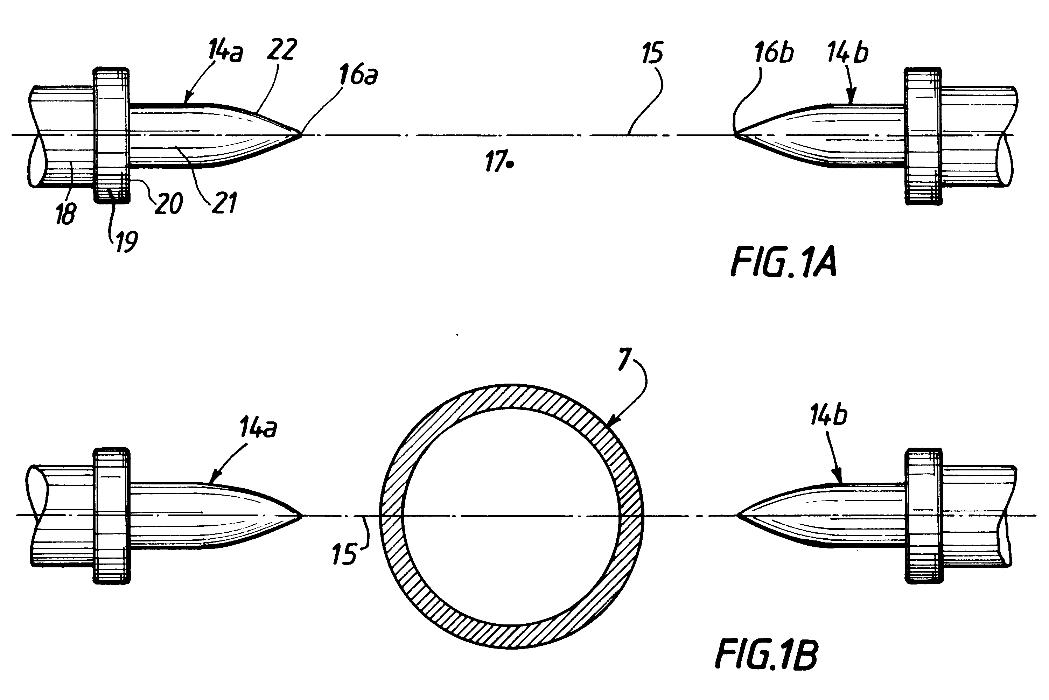

Ces moyens peuvent se présenter par exemple sous la forme de mâchoires situées vers les deux extrémités du tube 7. A l'état initial, (figure 1A) les deux outils 14a, 14b sont écartés l'un de l'autre.

On peut alors (figure 1B) mettre en place entre les deux outils de fluoperçage 14a, 14b un tube 7 dépourvu du double trou 10a, 10b.

Puis, selon la variante considérée, on déplace l'un des outils de fluoperçage par exemple l'outil 14a qui d'abord vient au contact du tube 7 (figure 1C) puis traverse sa paroi à partir de sa pointe 16.

Dans la réalisation considérée, chaque outil de fluoperçage 14a, 14b comprend, vers l'arrière, c'est-à-dire à l'opposé du tube 7, un mandrin 18 permettant son montage et sa fixation sur un support de la machine de fluoperçage. Prolongeant le mandrin 18 vers l'avant en direction du tube 7, se trouve une saillie périphérique 19 comprenant une face frontale 20 sensiblement perpendiculaire à l'axe 15. Vers l'avant de la face frontale 20 de la saillie 19, le mandrin 18 est prolongé par un fût 21 de forme générale cylindrique, d'une certaine longueur axiale, lui-même prolongé par une partie de forme générale conique 22 terminée par la pointe 16a, 16b.

La longueur axiale de l'outil de fluoperçage 14a, 14b entre la pointe 16a, 16b et la face frontale 20 peut être plus importante que le rayon extérieur du tube 7. C'est pour cette raison que le double trou du bouchon diamétral 10a, 10b est réalisé en deux étapes successives.

Naturellement, cette longueur axiale doit être suffisamment courte pour que le même outil 14a, 14b ne réalise qu'un seul trou 10a, 10b et non les deux.

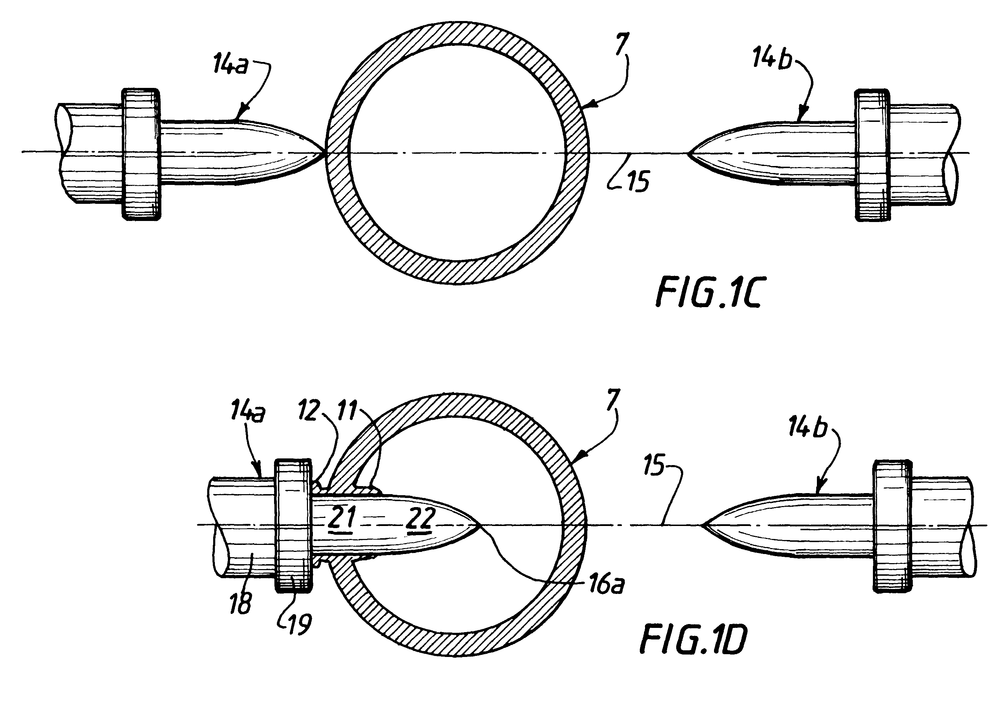

On se réfère maintenant à la figure 1D qui montre la situation de l'outil de fluoperçage 14a par rapport au tube 7 afin de la réalisation du trou 10a.

On constate que le palier interne 11 s'étend sur le fût 21 de l'outil 14a tandis que la collerette externe 12 est formée entre le fût 21 et la face frontale 20 de la saillie périphérique 19. Préférentiellement, le raccordement entre la saillie périphérique 19 et le fût 21 à l'endroit de la face 20 présente un arrondi.

Cette disposition donne un excellent fini à la collerette 12.

Quant au palier interne 11, il peut, éventuellement, présenter un bord 23 plus ou moins net, échancré. Toutefois, un tel défaut n'est pas gênant pour l'application considérée.

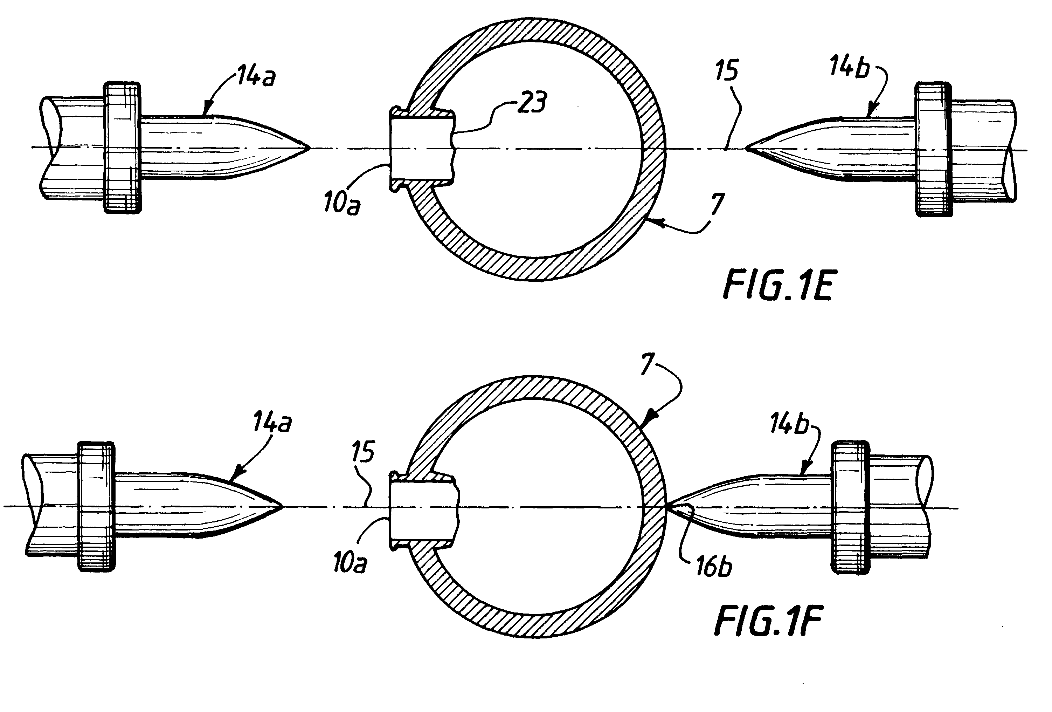

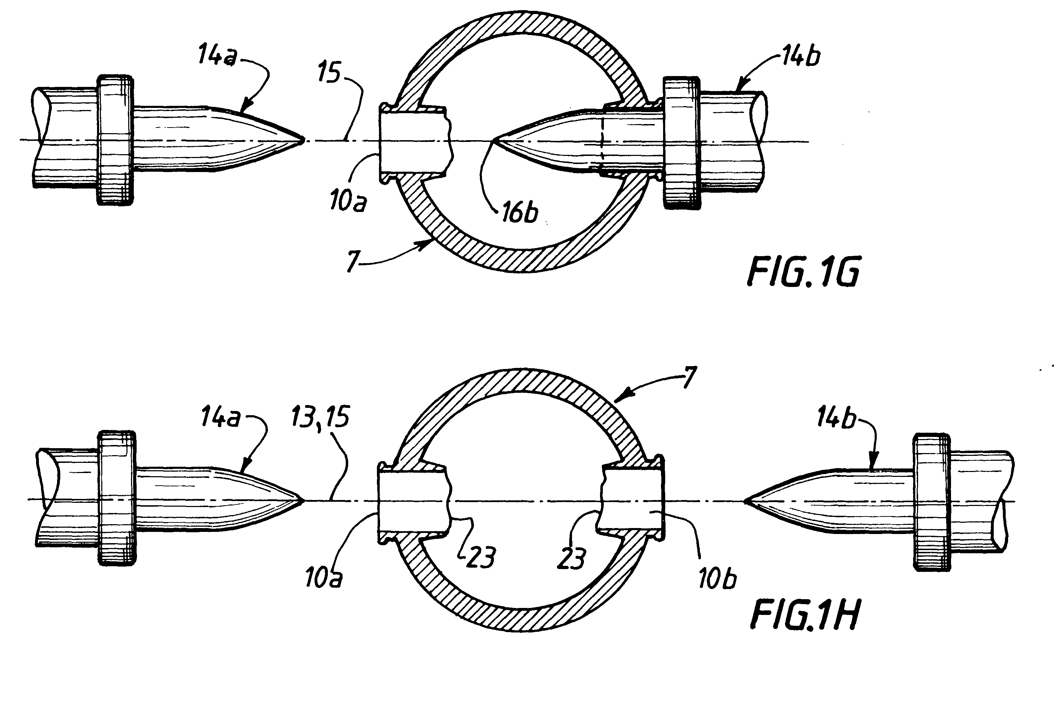

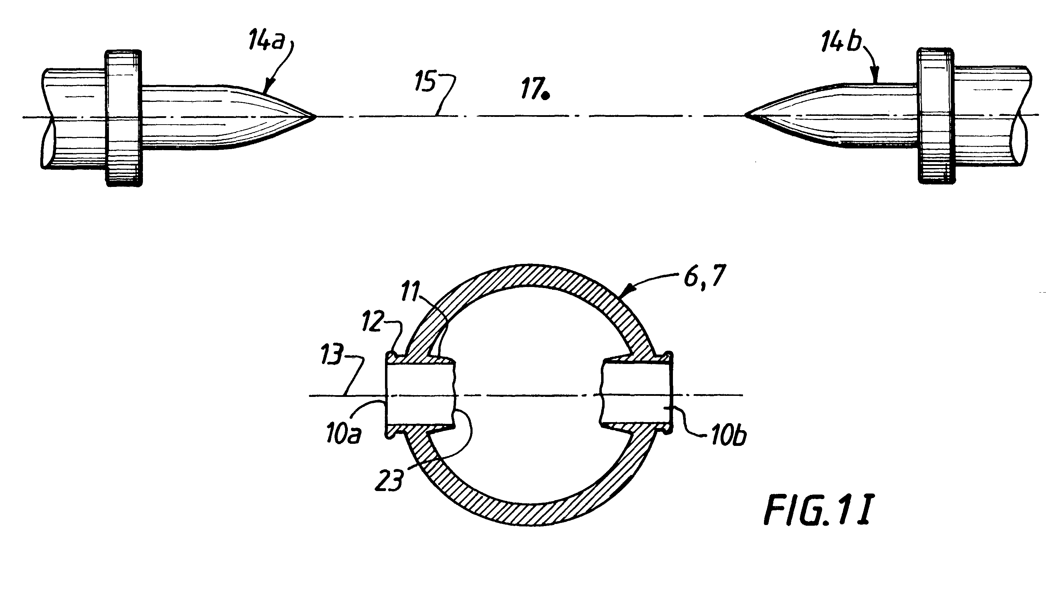

Il alors possible de retirer l'outil 14a du trou 10a réalisé (figure 1E). L'outil 14a restant maintenant dans sa position écartée du tube 7, on peut réaliser une opération similaire à celle précédemment décrite avec l'outil 14b. Celui-ci vient d'abord contre le tube 7 (figure 1F) puis y pénètre pour former le trou 10b (figure 1G). Enfin, l'outil 14b est retiré du trou 10b par coulissement axial le long de l'axe 15 jusqu'à revenir à sa position initiale (figure 1H). Finalement, les deux outils 14a, 14b retrouvent leur position initiale et le tube 7 pourvu du double trou diamétral 10a, 10b peut être évacué (figure 1I).

Grâce aux moyens de refroidissement, on procède, pendant le fluoperçage, à un refroidissement notamment à l'air et/ou à l'eau.

Le fluoperçage considéré est réalisé à une température de l'ordre de 1 050°C.

Selon une autre variante de réalisation, non représentée, on réalise le double trou débouchant diamétral 10a, 10b en une étape unique, les deux trous 10a, 10b simultanément. A cet effet, il faut utiliser des outils de fluoperçage 14a, 14b ayant une longueur axiale plus courte de manière qu'ils ne viennent pas en contact l'un avec l'autre lors du perçage.

Dans la réalisation représenté sur les figures, les deux paliers internes 11 sont écartés axialement l'un de l'autre. Toutefois, leur longueur axiale est suffisante pour assurer un bon maintien sur le tourillon 5.

La galvanisation est réalisée à chaud, par immersion, à une température de l'ordre de 450°C.

Elle concerne donc également les paliers 11 et les collerettes 12.

Il s'ensuit que le balancier 6 réalisé présente une excellente finition.

## Revendications

1. Procédé de fabrication d'un balancier de cornadis (6) dans lequel on part d'un tube creux, conformé, en acier et, successivement, on réalise d'abord dans le tube (7) un double trou débouchant diamétral (10a, 10b) par fluoperçage puis on réalise une galvanisation totale du tube (7) ainsi percé, y compris dans et à la périphérie des trous (10a, 10b), de manière à réaliser pour chaque trou (10a, 10b), par fluoperçage, d'une part un palier interne (11) dans le tube (7) et, d'autre part, une collerette externe (12), entourant le trou (10a, 10b) à sa périphérie et à l'extérieur du tube (7).

2. Procédé selon la revendication 1, **caractérisé par** le fait qu'on réalise le double trou débouchant diamétral (10a, 10b) en deux étapes successives, une pour chaque trou.

3. Procédé selon la revendication 1, **caractérisé par** le fait qu'on réalise le double trou débouchant diamétral (10a, 10b) en une étape unique, les deux trous simultanément.

4. Procédé selon l'une quelconque des revendications 1 à 3, **caractérisé par** le fait que les deux paliers internes (11) des deux trous (10a, 10b) sont écartés axialement l'un de l'autre.

5. Procédé selon l'une quelconque des revendications 1 à 4, **caractérisé par** le fait qu'on réalise le fluoperçage à une température de l'ordre de 1 050 °C.

6. Procédé selon la revendication 5, **caractérisé par** le fait qu'on procède, pendant le fluoperçage, à un refroidissement, notamment à l'air et/ou à l'eau.

7. Procédé selon l'une quelconque des revendications 1 à 6, **caractérisé par** le fait qu'on réalise la galvanisation à chaud, par immersion, à une température de l'ordre de 450 °C.

8. Balancier de cornadis, se présentant sous la forme d'un tube (7), creux, conformé, en acier, galvanisé en totalité, ayant un double trou débouchant diamétral (10a, 10b), chaque trou (10a, 10b) ayant d'une part un palier interne (11) dans le tube (7) et d'autre part une collerette externe (12) entourant le trou (10a, 10b) à sa périphérie et à l'extérieur du tube (7), ladite collerette (12) faisant fonction de rondelle d'écartement pour une chape de maintien (4) pourvu d'un tourillon (5) étant réalisé par le procédé selon l'une quelconque des revendications 1 à 7.

9. Balancier de cornadis selon la revendication 8, **caractérisé par** le fait que le double trou débouchant diamétral (10a, 10b) est situé dans la partie médiane de la longueur du balancier.

10. Balancier de cornadis selon l'une quelconque des revendications 8 à 9, **caractérisé par** le fait qu'elle comporte à l'une de ses extrémités une monture de guidage et de fin de course (8) en forme de fourche recevant un tourillon transversal (9).

11. Balancier selon la revendication 10, **caractérisé par** le fait que le tourillon (9) est réalisé en matière plastique ou/est amortisseur pour limiter le bruit.

12. Cornadis comprenant des éléments tubulaires de structure (2) dont un ou généralement plusieurs montants (2a) auxquels est solidarisé chacun une chape (4) recevant un balancier de cornadis selon l'une quelconque des revendications 8 à 11, montés pivotant grâce à un tourillon (5).

## Patentansprüche

1. Herstellungsverfahren eines Fressgitterschwingarms (6), bei dem man von einem geformten hohlen Rohr aus Stahl ausgeht und dann nacheinander im Rohr (7) durch Fliessbohren ein doppeltes diametrales Durchgangsloch (10a, 10b) herstellt und das so gebohrte Rohr (7) einer vollständigen Verzinkung unterzieht, einschließlich innerhalb und am Umfang der Löcher (10a, 10b), um für jedes Loch (10a, 10b) durch Fliessbohren einerseits einen internen Absatz (11) im Rohr und andererseits einen externen Kragen (12) herzustellen, der das Loch (10a, 10b) an seinem Umfang und außerhalb des Rohrs (7) umgibt.

2. Verfahren nach Anspruch 1, **dadurch gekennzeichnet, dass** man das doppelte diametrale Durchgangsloch (10a, 10b) in zwei aufeinanderfolgenden Etappen herstellt, eine für jedes Loch.

3. Verfahren nach Anspruch 1, **dadurch gekennzeichnet, dass** man das doppelte diametrale Durchgangsloch (10a, 10b) in einer einzigen Etappe herstellt, die beiden Löcher gleichzeitig.

4. Verfahren nach einem der Ansprüche 1 bis 3, **dadurch gekennzeichnet, dass** die beiden internen Absätze (11) der beiden Löcher (10a, 10b) in einem axialen Abstand voneinander angeordnet sind.

5. Verfahren nach einem der Ansprüche 1 bis 4, **dadurch gekennzeichnet, dass** das Fliessbohren bei einer Temperatur von etwa 1.050°C erfolgt.

6. Verfahren nach Anspruch 5, **dadurch gekennzeichnet, dass** man während des Fliessbohrens eine Kühlung vornimmt, insbesondere mit Luft und/oder Wasser.

7. Verfahren nach einem der Ansprüche 1 bis 6, **dadurch gekennzeichnet, dass** man die Feuerverzinkung durch Eintauchen bei einer Temperatur von etwa 450°C durchführt.

8. Fressgitterschwingarm, hergestellt nach dem Verfahren gemäss einem der Ansprüche 1 bis 7, in Form eines geformten hohlen, vollständig verzinkten Rohrs (7) aus Stahl, mit einem doppelten diametralen Durchgangsloch (10a, 10b), wobei jedes Loch (10a, 10b) einerseits einen internen Absatz (11) im Rohr (7) und andererseits einen externen Kragen (12) aufweist, der das Loch (10a, 10b) an seinem Umfang und außerhalb des Rohrs (7) umgibt, wobei der besagte Kragen (12) als Abstandscheibe für einen mit einem Zapfen (5) bestückten Haltebügel (4) dient.

9. Fressgitterschwingarm nach Anspruch 8, **dadurch gekennzeichnet, dass** das doppelte diametrale Durchgangsloch (10a, 10b) im mittleren Teil der Länge des Schwingarms angeordnet ist.

10. Fressgitterschwingarm nach einem der Ansprüche 8 bis 9, **dadurch gekennzeichnet, dass** es an einem seiner Enden eine gabelförmige Führungs- und Endstellungsvorrichtung (8) aufweist, in die ein Querzapfen (9) eingeführt wird.

11. Schwingarm nach Anspruch 10, **dadurch gekennzeichnet, dass** der Zapfen (9) aus Kunststoff besteht oder dämpfend ist, um den Lärm zu begrenzen.

12. Fressgitter mit rohrförmigen Strukturelementen (2), darunter einen oder im allgemeinen mehrere Ständer (2a), an denen jeweils ein Bügel (4) für die Aufnahme eines Fressgitterschwingarms nach einem der Ansprüche 8 bis 11 dank eines Zapfens (5) drehbar befestigt ist.

## Claims

1. A method of manufacturing a cornadis arm (6) in which the starting point is a shaped hollow steel tube and, successively, there is first of all produced in the tube (7) a double diametral through hole (10a, 10b) by flow drilling and then complete galvanisation of the tube (7) thus drilled is carried out, including in and at the periphery of the holes (10a, 10b), so as to produce for each hole (10a, 10b), by flow drilling, on the one hand an internal step (11) in the tube (7) and on the other hand an external collar (12) surrounding the hole (10a, 10b) at its periphery and outside the tube (7).

2. A method according to Claim 1, **characterised by** the fact that the double diametral through hole (10a, 10b) is produced in two successive steps, one for each hole.

3. A method according to Claim 1, **characterised by** the fact that the double diametral through hole (10a, 10b) is produced in a single step, the two holes simultaneously.

4. A method according to any one of Claims 1 to 3, **characterised by** the fact that the two internal steps (11) of the two holes (10a, 10b) are separated axially from each other.

5. A method according to any one of Claims 1 to 4, **characterised by** the fact that the flow drilling is carried out at a temperature of around 1050°C.

6. A method according to Claim 5, **characterised by** the fact that, during the flow drilling, cooling is carried out, notably by air and/or water.

7. A method according to any one of Claims 1 to 6, **characterised by** the fact that the hot galvanisation is carried out, by immersion, at a temperature of around 450°C.

8. A cornadis arm in the form of a shaped hollow steel tube (7), completely galvanised, having a double diametral through hole (10a, 10b), each hole (10a, 10b) having on the one hand an internal step (11) in the tube (7) and on the other hand an external collar (12) surrounding the hole (10a, 10b) at its periphery and outside the tube (7), the said collar (12) serving as a spacer washer for a holding fork joint (4) provided with a journal (5), being produced by means of the method according to any one of Claims 1 to 7.

9. A cornadis arm according to Claim 8, **characterised by** the fact that the double diametral through hole (10a, 10b) is situated in the middle part of the length of the arm.

10. A cornadis arm according to any one of Claims 8 to 9, **characterised by** the fact that it has, at one of its ends, a guidance and end-of-travel mount in the form of a fork receiving a transverse journal (9).

11. An arm according to Claim 10, **characterised by** the fact that the journal (9) is produced from material which is a plastic and/or is a damper for limiting noise.

12. A cornadis comprising tubular structural elements (2), including one or generally more uprights (2a), to each of which there is fixed a fork joint (4) receiving a cornadis arm according to any one of Claims 8 to 11, mounted so as to pivot by means of a journal (5).
